# EUROPEAN PATENT SPECIFICATION

(11) **EP 1 766 847 B1**
(45) Date of publication and mention of the grant of the patent: **08.08.2018**
(21) Application number: 05761857.1
(22) Date of filing: 24.06.2005
(51) Int. Cl.: H04L 9/08, H04L 9/32, H04L 29/06

(54) **METHOD FOR GENERATING AND VERIFYING AN ELECTRONIC SIGNATURE**
VERFAHREN ZUR ERZEUGUNG UND ÜBERPRÜFUNG EINER ELEKTRONISCHEN UNTERSCHRIFT
PROCEDE PERMETTANT DE GENERER ET DE VERIFIER UNE SIGNATURE ELECTRONIQUE

(30) Priority: 25.06.2004 NO 20042691
(43) Date of publication of application: 28.03.2007
(73) Proprietor: Buypass AS, 0402 Oslo (NO)
(72) Inventor: SKORVE, Eigil, Tapio, N-0464 OSLO (NO); HENRIKSVEEN, Mads, Egil, N-2819 GJØVIK (NO); HAGEN, Jon, N-3425 REISTAD (NO); LINDSTØL, Gunnar, N-0786 OSLO (NO); IMSDALEN, Tollef, N-2345 ÅDALSBRUK (NO); LYSNE, Edvard, N-2315 HAMAR (NO); KOMMISRUD, Ragnhild, N-2073 BØN (NO)
(74) Representative: Onsagers AS
(86) International application number: PCT/NO2005/000230
(87) International publication number: WO 2006/001710

(56) References cited:
- WO-A-03/093923
- US-A- 5 757 913
- US-A1- 2002 099 940
- US-A1- 2004 088 546
- US-B1- 6 529 886
- SCHNEIER B: "APPLIED CRYPTOGRAPHY 2ND EDITION" APPLIED CRYPTOGRAPHY. PROTOCOLS, ALGORITHMS, AND SOURCE CODE IN C, NEW YORK, NY : JOHN WILEY & SONS, US, 1996, pages 455-459, XP002347912 ISBN: 0-471-11709-9

## Description

### TECHNICAL FIELD

The present invention relates in general to data security and mobile data communication.

More specifically, the invention relates to a method, a computer program and a mobile terminal for providing an electronic signature, for execution by a processing unit in a mobile terminal. The invention further comprises a method, a computer program and a verification server for verifying the electronic signature.

### BACKGROUND OF THE INVENTION

A result of the general advances in digital communications technology is that more and more types of communication and transactions are taking place digitally. The spread of mobile communication, in particular, has resulted in mobile terminals or handsets such as mobile telephones or PDAs being used for various forms of electronic commerce and mobile payment services.

When implementing such services, security is an essential factor. It is particularly important to provide secure, efficient and simple authentication of the identity of a mobile terminal user.

The simplest authentication solutions, based on user name and password, have a number of drawbacks. These include a conflict between the need for a lengthy and distinctive password for the sake of security, and the desire for a short and easily memorised password for the sake of user friendliness. Passwords sent over open networks will also be a cause of reduced security.

Today, mobile operators have a great degree of control over the infrastructure of the mobile channel, and thus also the services that are offered via the mobile channel. Accordingly, authentication solutions based on the SIM (Subscriber Identity Module) in the mobile terminal have previously been described.

A generally recognised, prior art technique is known as strong authentication. This is based on the electronic identity being linked to an encryption key that is stored so as to be secure and inaccessible to unauthorised persons, specifically in a smartcard. All operations that employ the key can be executed internally in a processor on the smartcard.

There are previously known such solutions for strong authentication in which the SIM card in the mobile terminal is also a smartcard containing an encryption key. However, this means that the mobile operator, who is the actual owner of the card, has full control over the key and the authentication operations in which the key is used, since the key storage device in the SIM card is not accessible to an independent service provider. A solution of this kind is therefore not operator-independent.

The ordinary memory in the mobile terminal is accessible to an independent service provider, and therefore in principle permits an operator-independent authentication solution. However, this memory is not suitable for storing keys because the contents of the memory are readily accessible also to unauthorised persons.

US 6 529 886 teaches an operator-independent authentication process where importance is given to maintaining anonymity towards a third party.

The document refers to (1) the use of a counter on the client side, (2) the derivation of client-specific keys from a master key, and (3) a single-directional authentication protocol from client to server.

The present invention differs from this document, *inter alia,* by the generation of dynamic keys using a master key, a counter and a user credential such as a password or a pin code, thereby eliminating the need to store the dynamic key in the memory of the mobile telephone.

US 2002/0099940 teaches an authentication solution where a user establishes, via the web, a connection with an authentication server that collects authentication information in the form of a password. A platform-independent code in the form of a Java applet is then downloaded to a mobile client. This code identifies itself to the server, and a secure connection is established.

The document deals primarily with the establishment of a secure connection, and it cannot be seen to relate to the signing of messages. The document cannot be seen to describe key generation like that used in the present invention. US 5 757 913 shows a method of signing a message.

### SUMMARY OF THE INVENTION

The present invention provides a method for generating an electronic signature, for execution by a processing unit in a mobile terminal.

A particular object of the invention is to provide a method which specifically involves operator independence.

A further object of the invention is to provide methods of the aforementioned type, which involve a sufficient degree of security against malicious attack or attempted fraud.

In accordance with the present invention, there is provided a method for providing an electronic signature as disclosed in claim 1 below, a corresponding computer program as disclosed in claim 8 below, and a corresponding mobile terminal as disclosed in claim 9 below.

Advantageous embodiments are set forth in the dependent claims.

According to the invention, it is assured that the dynamic key is only used transiently for signature purposes. The dynamic key is therefore not stored. Furthermore, it is assured that the user's credential, for example, a password, is not stored in the mobile terminal or transmitted over the line. These features of the invention contribute to increased security.

A relevant utilisation of the invention is to use the terminal application as software-based user identification or authentication, for example, in services such as mobile ordering and/or payment. This results in authentication that does not require access to keys or other data stored in the SIM card, or to other functionality provided by the SIM card. These features of the invention result in operator independence.

### BRIEF DESCRIPTION OF THE DRAWINGS

The appended drawings illustrate an advantageous embodiment of the invention. Together with the description, the drawings serve to explain the principles of the invention.
Fig. 1 is a schematic block diagram illustrating a system in which a mobile terminal and a verification server are adapted to operate in accordance with methods according to the invention.
Fig. 2 is a general, schematic flow chart illustrating a sequence of steps from the ordering/registration of a terminal application to the use of the terminal application.
Fig. 3 is a schematic block diagram illustrating a mobile terminal adapted to operate in accordance with the invention.
Fig. 4 is a schematic flow chart illustrating a method for execution in a mobile terminal according to the invention; and
Fig. 5 is a schematic process diagram illustrating the generation and use of a terminal application; and
Fig. 6 is a schematic process diagram illustrating a verification process.
Fig. 7 is a schematic block diagram for a further aspect of the invention.

### DETAILED DESCRIPTION OF PREFERRED EMBODIMENTS

In what follows the invention will be described in more detail by way of example with reference to the drawings. Where possible, the same reference numerals are used for identical elements in the different drawings.

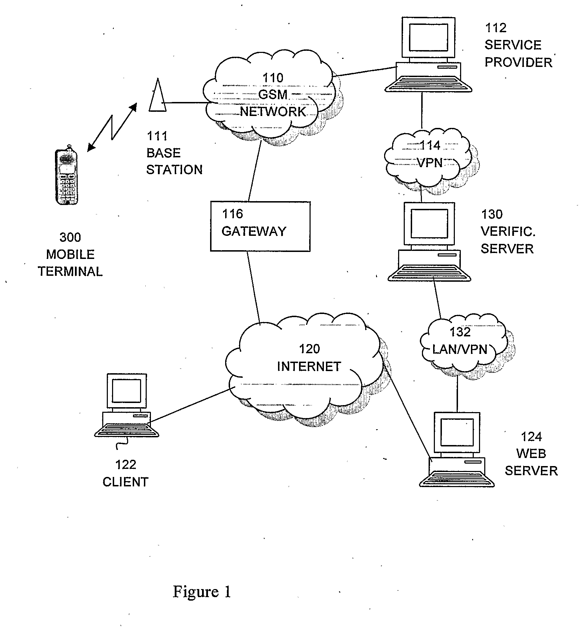

Fig. 1 is a schematic block diagram illustrating a system where a mobile terminal operates in accordance with the method according to the invention.

The system in Fig. 1 comprises a mobile network 110, such as a GSM network, with a plurality of base stations, of which one is illustrated at 111. The base station 111 communicates with a user's mobile terminal 300, such as a mobile telephone. The system further comprises a client computer 122 provided with a web client. The client computer 122 and a web server 124 are both operatively connected to a computer network 120, preferably the Internet.

A gateway 116 is provided for operatively interconnecting the mobile network 110 and the computer network 120.

A server 112 at the service provider is operatively connected to the mobile network 110. The server 112 at the service provider is also operatively connected to the verification server 130, preferably via a closed communications link, for example by means of a virtual private network 114. As those skilled in the art will appreciate, a virtual private network 114 of this kind can advantageously be implemented as a subset of the Internet, and thus a part of the computer network 120. For the sake of simplicity, the virtual private network in Fig. 1 is illustrated as a separate connection.

The verification server 130 is operatively connected to the web server 124. The verification server 130 and the web server 124 may be located in the same geographic area, and in that case the connection 132 between them can be accomplished using a local network (LAN). Alternatively, the connection 132 can be accomplished using a virtual private network. As those skilled in the art will appreciate, a virtual private network 132 of this kind can advantageously be implemented as a subset of the Internet, and thus a part of the computer network 120. For the sake of simplicity, the connection 132 in Fig. 1 is illustrated as a separate connection.

The client computer 122 is provided with a web browser. Thus, a user can by means of the client 122 exchange information with other computers linked to the network 120, such as the web server 124.

By using the web browser in the client computer 122, the user can carry out an ordering and registration process that is executed by the web server 124. This process permits the user to register himself and order a downloadable, specially adapted terminal application for mobile signing/authentication.

The communication between the client computer 122 and the web server 124 may advantageously take place in an encrypted manner, for example, by using the security protocol SSL (Secure Sockets Layer).

The web server 124 is therefore adapted to generate a specially adapted terminal application, comprising an executable program code which can be executed by the mobile terminal 300. A J2ME application (midlet suite) containing the necessary code and other data is especially preferred. This ensures portability.

By means of the mobile network 110 and the service provider 112, it is possible to establish a communication channel between the mobile terminal 300 and the verification server 130. To hinder unauthorised viewing of protocols and unauthorised access to messages and/or signatures, unauthorised persons should be prevented from gaining access to this channel. This can be handled by the built-in security/encryption functions in the mobile network 110 and in the preferred VPN connection 114.

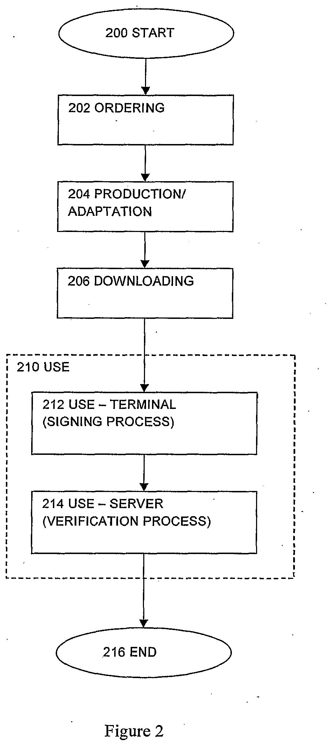

Fig. 2 is a general flow chart illustrating the sequence of steps from the ordering/ registration of a terminal application to implemented use of the terminal application.

The sequence starts at the start step 200.

First, the ordering and registration process 202 is executed. During this process, a user orders a specially adapted terminal application for a specified use. The ordering is typically carried out by means of interaction between the client computer 122 and the web server 124 over the network 120, typically the Internet.

During the ordering and registration process 202, the user identifies and registers himself and orders a downloadable terminal application. By exchanging information with the web server 124, the user can, via the client computer 122, select a desired application type. During the ordering and registration process 202, the desired application type is linked together with a mobile subscriber identification, preferably a mobile telephone number, which is presented by the user. The mobile subscriber identification is used by the web server 124 as an address for a message regarding downloading, which will be sent to the mobile terminal 300 in connection with the downloading process 206.

During the ordering and registration process 202, the user also presents the relevant credential, in particular a password or a PIN code, which will also be associated with the specific terminal application.

Next, the production or adaptation process 204 is executed. The web server 124 is during the adaptation process 204 arranged to specially adapt a pre-generated terminal application, comprising an executable program code which can be - executed by the mobile terminal 300. Most preferably, the terminal application is a J2ME application (midlet suite), containing the necessary code and other data.

The adaptation process 204 starts from an already generated program code for a terminal application, of the type that is selected by the user during the ordering process 202.

The adaptation process 204 involves the terminal application being assigned an identifier that is unique to the terminal application concerned.

The credential that was input from the user during the ordering step 202 is stored in a database in the web server 124, associated with the assigned unique identifier for the terminal application. The credential is preferably stored in an encrypted manner.

The adaptation process 204 further involves the terminal application being assigned a basic key which is also unique to the terminal application in question. The basic key is generated during the adaptation process, said basic key being derived from a centrally stored master key and from the unique identifier for the terminal application.

The adaptation process 204 further involves the program code being marked with the unique identifier and the basic key. Preferably, the data representing the identifier is inserted in the adapted terminal application code in a direct and open manner, whilst the data representing the basic key is inserted in the terminal application code in an obfuscated manner. Obfuscated should in this connection be understood to mean that the basic key is hidden in the code in such manner that it cannot openly be read or derived from the code, for example, by decompilation.

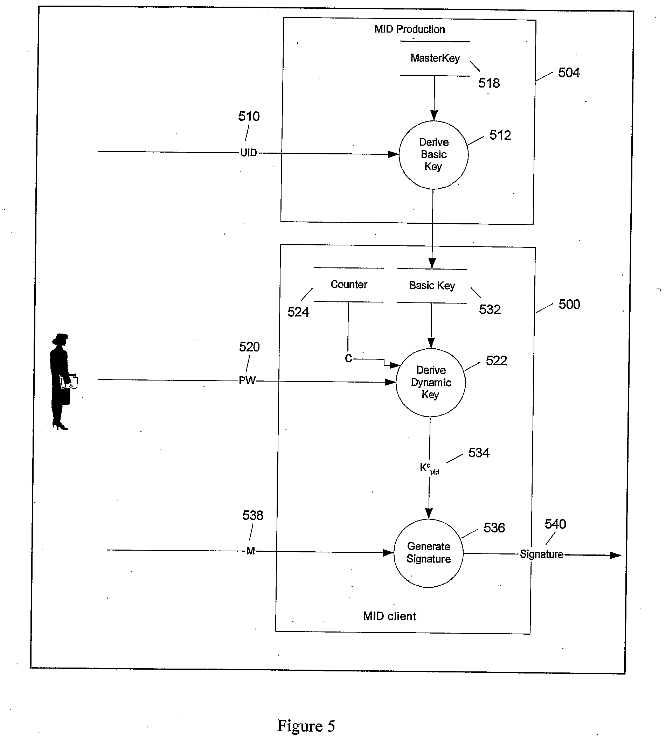

Additional details of the adaptation process 204 will be further described with reference to Fig. 5 below.

The resultant, adapted terminal application is stored on the web server 124, preferably as a so-called midlet suite.

In the downloading step 206 in Fig. 2, a service message is generated, typically in the form of an SMS message, which is sent to the mobile terminal 300. The mobile terminal 300 is addressed by means of the aforementioned mobile subscriber identification. The message contains a link to the terminal application which is stored on the web server 124. When the user of the terminal activates this link, this initiates a downloading of the terminal application from the web server 124 via the network 120, the gateway 116 and the mobile network 110 to the mobile terminal 300.

After the terminal application has been transferred to the mobile terminal, and the mobile terminal has thus been rendered capable of executing the terminal application, a composite application process 210 is carried out. This comprises two subprocesses: a signing process 212 for execution in the mobile terminal, and a verification process 214 for execution in the verification server.

The signing process 212 involves a user executing the specially adapted, downloaded terminal application on his mobile terminal. The verification process is executed in the verification server in order to verify the signature after the signing process has been executed. This can in turn be used as verification of the user's identity.

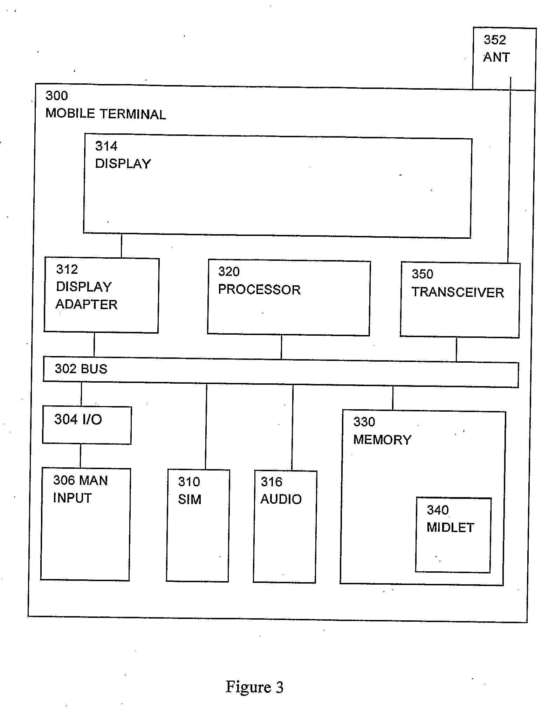

Fig. 3 is a schematic block diagram illustrating the structural architecture of a mobile communication terminal that is adapted to operate in accordance with the invention.

The mobile terminal 300 is constructed having a standard bus structure, wherein a bus 302 is operatively connected to a processor 320, a memory 330, a subscriber identification module (SIM) 310 in the form of a smartcard, an audio unit 316, a display adapter 312, a radio communications module or transceiver 350 and an input adapter 304.

The display adapter 312 is further connected to a display 314.

The transceiver 350 is further connected to an antenna 352.

The input adapter 304 is adapted to receive manual input from an input unit such as a keypad 306.

The memory 330 is adapted in order, during the operative functional state of the terminal, to contain, *inter alia,* specially adapted terminal applications (midlet suite) 340. A terminal application comprises an executable program code which, *inter alia,* contains data representing a basic key associated with the terminal application.

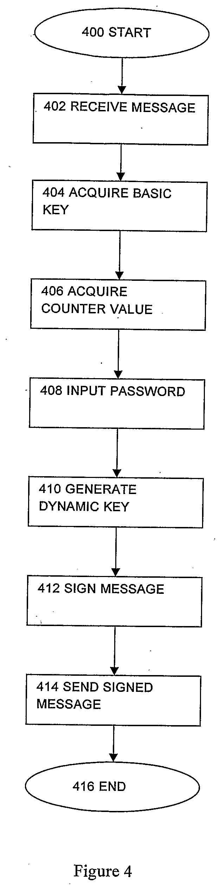

Fig. 4 is a schematic flow chart illustrating a method for execution by a mobile terminal, according to the invention.

The illustrated method is intended to be executed by a processing unit 320 in a mobile terminal 300, and its purpose is to provide an electronic signature to a received message. The signed message can then be transferred to a verification server 130.

The method is initiated at the start step 400.

In the receiving step 402, a message is received, preferably from the service provider's component in the terminal. In principle, the message can be a random message or challenge, the content of which has no meaning, such as a random byte sequence. In practice, and especially if the method is to be used in connection with mobile ordering or payment solutions, the message may contain commerce data, especially data representing a contract between the service provider 112 and the user of the mobile terminal 300.

In the step 404, a basic key is fetched from a memory area in the terminal. Specifically, the basic key is fetched from a memory area containing a code portion of a terminal application, that is to say, an application program that has been downloaded in the terminal. Preferably, the code portion, including algorithms and the data representing the basic key, is obfuscated.

Then, the step 406 is executed, in which a counter value is fetched from a counter in the mobile terminal, preferably from a persistent memory. The counter value is incremented after being fetched, or at another time, so that it has a new value for each new, executed signature generation step 412 (see below).

Next, the step 408 of inputting a credential from a user of the mobile terminal is executed. Preferably, a password is entered from the user by means of the terminal keypad or other user-operated manual input unit. The password may advantageously be numerical, in the form of, for example, a four-digit PIN code.

The further processing presupposes the use of an underlying encryption function, which is employed for generation of both key and signature. Particularly advantageously, the encryption function can be based on symmetric cryptography, such as 3DES.

Now the step 410 is executed, in which a dynamic key is generated based on the basic key, the counter value and the credential.

The key generation process 410 includes the use of the predetermined encryption function to generate the dynamic key. The basic key, the counter value and the credential are preferably all used as input to this encryption function. Most preferably, the dynamic key is generated according to the following scheme:
K_{I}^{c} = f(BK(i), c, PW), wherein
f(BK, c, P) is a function for generating a unique encryption key,
BK(i) is the basic key; and
PW is the input credential.

The signature generation step 412 is then executed, during which a signature for the message is generated using the dynamic key. This signature generation step 412 comprises the use of a predetermined signing function on the message received in the receiving step 402.

The signing function is based on an underlying encryption function as stated above. Examples of suitable signing functions are known to those skilled in the art as CBC-MAC and OMAC.

Preferably, the step 414 is then executed, in which the unsigned message, and in which the resulting signature are sent to the verification server 130. The counter value and the unique identifier for the terminal application are sent in addition.

With the method described above, it is assured that a dynamic key is only used transiently or temporarily, and solely for signing purposes. The dynamic key is therefore not stored at any time or in any place. Furthermore, it is assured that the credential, such as the PIN code, is not kept stored in the mobile terminal. These features of the invention contribute to increased security.

Fig. 5 is a process diagram illustrating special adaptation and use of a terminal application.

The top part of Fig. 5, indicated by 504, illustrates an adaptation process that is executed for production of a specially adapted terminal application. This process 504 has previously been referred to using the reference numeral 204 in Figure 2. The production process 204 is typically executed in the web server 124, in response to a completed ordering process 202.

The bottom part of Fig. 5, indicated by 500, illustrates a signing process for execution by the terminal application. This signing process 500 is executed in the mobile terminal 300 and has previously been referred to using the reference numeral 212 in Fig. 2.

In the following the adaptation process 504 is first described:
A basic key 532 is derived based on a unique identifier 510 and a master key 518.
The basic key 532 is used as input to the signing process 500.

In the following the signing process 500 is described:
A dynamic key 534 is derived from the credential 520, the counter value 524 and
the basic key 532. The dynamic key 534 is used as input to the signature generation subprocess 536.

During the signature generation subprocess 536, the message 538 is signed using the dynamic key 534, which results in a signature 540.

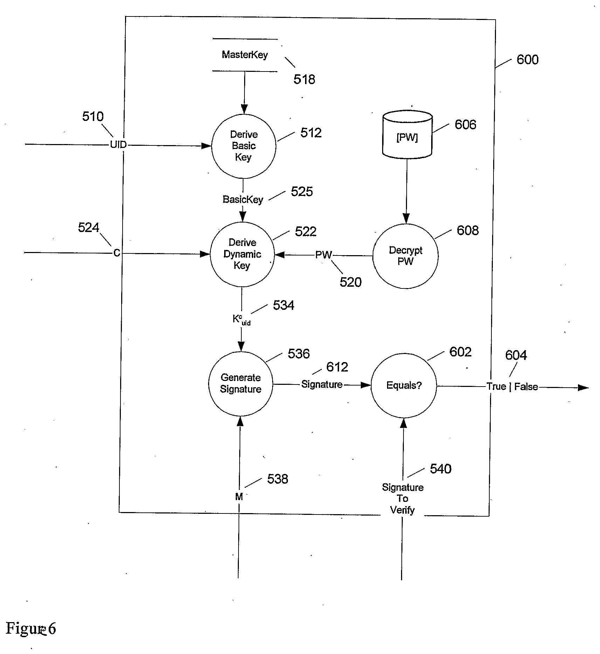

Fig. 6 is a schematic process diagram illustrating a verification process 600.

The verification process 600 corresponds essentially to the same subprocesses/steps as the adaptation process 204 and the signing process 212. Where the subprocesses/steps correspond to each other, the same reference numerals are used in Figures 5 and 6.

The verification process 600 is executed in the verification server 130.

Input data to the verification process consists of the unique identifier 510, the counter value 524 , the unsigned message 538 and the signature 540 that is to be verified.

The purpose of the verification process 600 is to give a verification signal 604 (with the value true or false), which indicates whether the submitted signature 540 is the correct signature for the message 538, given the unique identifier 510 for the terminal application, and the counter value 524.

The unique identifier 510, the counter value 524, the unsigned message 538 and the signature 540 are received from the mobile terminal after the mobile terminal has completed the signing process. Preferably, this data is received via the server 112 at the service provider.

In addition, the master key 518 is available for the verification process 600, as it is stored in the verification server 130.

Furthermore, the verification process 600 has access to the database 606 in the verification server 130. The database 606 comprises stored credentials (in particular passwords or PIN codes) in an encrypted form. A decryption process 608 is provided in order to decrypt stored, encrypted credentials, and in order thereby to provide an unencrypted credential 520 associated with a relevant unique identifier 510.

A basic key 525 is derived in module 512 based on a unique identifier 510 and a master key 518.

In the module 522 a dynamic key is derived based on the credential 520, the counter value 524 and the basic key 525.

The credential 520 is generated by the decryption function 608 as mentioned above.

The dynamic key 534 is used as input to the signature generation subprocess 536.

In the signature generation subprocess 536, the input message 538 is signed using the dynamic key 534, which results in a generated signature 612.

In the comparison subprocess 602, the generated signature 612 is compared with the input signature 540 that is to be verified. If the signatures are identical, the verification signal 604 is established as true. If they are not identical, the verification signal 604 is established as false.

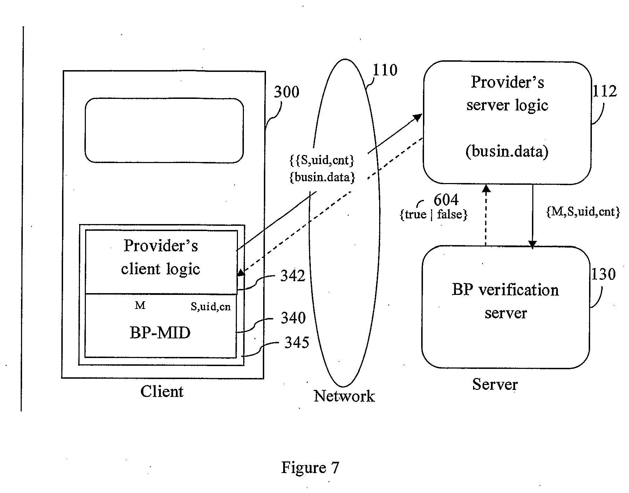

Figure 7 is a schematic block diagram illustrating a further aspect of the present invention. This figure shows that the mobile terminal 300 may also contain an additional component 342, adapted to the services offered by the service provider 112, such as mobile ordering or payment services.

The terminal application may consist of several components, but will typically consist of two components. These are a component from the provider and a component in accordance with the present invention, which together constitute a single terminal application as is shown schematically by module 345 in Figure 7.

Thus, the mobile terminal 300 is in Figure 7 shown to comprise an application which may contain two components that can include a downloaded signing component 340 which operatively cooperates and communicates with the provider component 342. Both components 340, 342 are executable program modules which (with reference back to Fig. 3) are included in the memory 330 in the mobile terminal 300. As indicated in Fig. 7, the unsigned message M is transferred from the provider component 342 to the signing component 340, whilst the signature S, the unique identifier uid, and the counter value cnt are returned to the provider component 342. Signature S, unique identifier uid, counter value cnt and commerce data, i.e., data associated with the services offered, and especially data associated with a contract between the user and the service provider, are transferred over the mobile communications network to the server 112 at the service provider. The service provider server then communicates message M, signature S, unique identifier uid and counter value cnt to the verification server, via the communications channel (for example, VPN) 114. In the verification server there is provided a verification signal 604 that is returned to the service provider server 112, and which indicates verification or refusal of the generated signature. This may be used in the service provider server 112 as verification or authentication of the user's identification.

Many modifications and adaptations of the present invention will of course be obvious to those skilled in the art, either on interpreting the above detailed description of the invention or on putting the invention into practice.

The above detailed description is presented in particular with a view to illustrating and describing advantageous embodiments of the invention. However, the description does not in any way limit the invention to the specific embodiments that are described in detail.

The mobile network 110 is by way of example disclosed as being a GSM network. However, it should be understood that other mobile communication networks are equally as useful for the invention, e.g., a 3G or UMTS network.

The mobile terminal 300 is by way of example disclosed as being a mobile telephone. It should be understood that other types of mobile terminals, adapted for communication with the mobile network 110, are just as useful for the invention, for instance, PDAs or portable PCs.

Where it has been stated that the mobile terminal application advantageously is a J2ME application (midlet suite), it should be understood that such an embodiment is particularly expedient for reasons of portability, i.e., the possibility of being able to run the application on different hardware platforms without further modification. Other possible implementations are however feasible within the scope of the invention. In particular, the tenninal application may be coded at a lower level (object code), or in other high-level languages.

Further modifications and variations will be obvious to the skilled person in the light of the above description. The scope of the invention is apparent from the patent claims below and their equivalents.

## Claims

1. A method for providing an electronic signature executed by a processing unit in a terminal, wherein the method comprises the following steps:
- fetching a basic key from a memory area in the terminal;
- inputting data from a user;
- generating a dynamic key based on the basic key and the input data;
- receiving an electronic message; and
- generating an electronic signature for the message using the generated dynamic key,
**characterized in that**
the step of inputting data from a user includes inputting a credential from the user, the terminal is a mobile communication terminal adapted for communication with a mobile communication network such as a GSM, UMTS or 3G network, the mobile terminal containing the processing unit that executes the method, and
the step of fetching a basic key comprises inputting the basic key from an executable code portion of a terminal application that has been downloaded in the mobile communication terminal, the code portion being contained in the memory area in the mobile communication terminal.

2. A method in accordance with claim 1, wherein at least the basic key is obfuscated in said executable code portion.

3. A method in accordance with one of claims 1-2, wherein the step of generating a dynamic key based on the basic key and the credential is further based on a fetched counter value from a counter in the terminal by inputting the counter value from a read/write memory in the terminal.

4. A method in accordance with one of claims 1-3, wherein the step of inputting a credential comprises:
fetching a password from the user.

5. A method in accordance with one of claims 1-4, wherein the step of generating a dynamic key comprises:
use of the basic key, the counter value and the credential as input.

6. A method in accordance with one of claims 1-5, further comprising the step of:
- sending a signed message, comprising the electronic message and the generated signature, to a verification server.

7. A method in accordance with claim 6, wherein also the counter value and the unique identifier are sent to the verification server.

8. A computer program, comprising program instructions which upon execution by a processing unit in a mobile communication terminal cause the processing unit to execute a method in accordance with one of the claims 1-7.

9. A mobile communication terminal for providing an electronic signature, the mobile communication terminal comprising a processing unit arranged for executing a method in accordance with one of the claims 1-7.

10. A system for providing an electronic signature in a mobile communication terminal, comprising
- a mobile communication network (110) with at least one base station (111),
- a mobile communication terminal (300) communicating with said base station (111),
- a computer network (120),
- a web server (124) operatively connected to said computer network (120),
- a client computer (122) provided with a web client, operatively connected to said computer network (120),
- a gateway (116) operatively interconnecting said mobile communication network (110) and said computer network (120),
**characterized in that** said mobile communication terminal (300) comprises a processing unit arranged for executing a method in accordance with one of the claims 1-7.

11. A system according to claim 10,
wherein said web server (124) executes an ordering and registration process that permits the registering of a user via the web client in the client computer (122) and downloading of a specially adapted terminal application from the web server (124) to said mobile communication terminal (300).

12. A system according to claim 11,
wherein a program code of said specially adapted terminal application is marked with a unique identifier and a unique basic key.

13. A system according to one of the claims 11-12,
further comprising a verification server (130) executing a verification process (214) configured to verify said electronic signature provided in said mobile communication terminal.

## Patentansprüche

1. Verfahren zum Bereitstellen einer elektronischen Signatur, ausgeführt von einer Verarbeitungseinheit in einem Endgerät, wobei das Verfahren die folgenden Schritte aufweist:
- Abrufen eines Basis-Schlüssels aus einem Speicherbereich in dem Endgerät;
- Eingeben von Daten von einem Benutzer;
- Erzeugen eines dynamischen Schlüssels basierend auf dem Basis-Schlüssel und den Eingabedaten;
- Empfangen einer elektronischen Nachricht; und
- Erzeugen einer elektronischen Signatur für die Nachricht unter Verwendung des erzeugten dynamischen Schlüssels,
dadurch charakterisiert, dass
der Schritt des Eingebens von Daten von einem Benutzer das Eingeben eines Berechtigungsnachweises von dem Benutzer aufweist,
das Endgerät ein Mobilkommunikationsendgerät ist, eingerichtet zur Kommunikation mit einem Mobilkommunikationsnetzwerk wie beispielsweise einem GSM-, UMTS- oder 3G-Netzwerk, wobei das mobile Endgerät die Verarbeitungseinheit enthält, die das Verfahren ausführt, und
der Schritt des Abrufens eines Basis-Schlüssels das Eingeben des Basis-Schlüssels von einem ausführbaren Code-Teil einer Endgerätanwendung, die in das Mobilkommunikationsendgerät heruntergeladen wurde, aufweist, wobei der Code-Teil in dem Speicherbereich in dem Mobilkommunikationsendgerät enthalten ist.

2. Verfahren gemäß Anspruch 1, wobei mindestens der Basis-Schlüssel in dem ausführbaren Code-Teil verschleiert ist.

3. Verfahren gemäß einem der Ansprüche 1 bis 2, wobei der Schritt des Erzeugens eines dynamischen Schlüssels basierend auf dem Basis-Schlüssel und dem Berechtigungsnachweis ferner auf einem abgerufenen Zählerwert von einem Zähler in dem Endgerät durch Eingeben des Zählerwerts von einem Lese/Schreibe-Speicher in dem Endgerät basiert.

4. Verfahren gemäß einem der Ansprüche 1 bis 3, wobei der Schritt des Eingebens eines Berechtigungsnachweises aufweist:
Abrufen eines Passworts von einem Benutzer.

5. Verfahren gemäß einem der Ansprüche 1 bis 4, wobei der Schritt des Erzeugens eines dynamischen Schlüssels aufweist:
Verwendung des Basis-Schlüssels, des Zählerwerts und des Berechtigungsnachweises als Eingabe.

6. Verfahren gemäß einem der Ansprüche 1 bis 5, ferner aufweisend den Schritt des
- Sendens einer signierten Nachricht, aufweisend die elektronische Nachricht und die erzeugte Signatur, an einen Verifikationsserver.

7. Verfahren gemäß Anspruch 6, wobei auch der Zählerwert und der eindeutige Identifikator an den Verifikationsserver gesendet werden.

8. Computerprogramm, das Programminstruktionen enthält, die bei Ausführung durch eine Verarbeitungseinheit in einem Mobilkommunikationsendgerät die Verarbeitungseinheit dazu bringen, ein Verfahren gemäß einem der Ansprüche 1 bis 7 auszuführen.

9. Mobilkommunikationsendgerät zum Bereitstellen einer elektronischen Signatur, wobei das Mobilkommunikationsendgerät eine Verarbeitungseinheit aufweist, die zum Durchführen eines Verfahrens gemäß einem der Ansprüche 1 bis 7 eingerichtet ist.

10. System zum Bereitstellen einer elektronischen Signatur in einem Mobilkommunikationsendgerät, aufweisend
- ein Mobilkommunikationsnetzwerk (110) mit mindestens einer Basisstation (111),
- ein Mobilkommunikationsendgerät (300), das mit der Basisstation (111) kommuniziert,
- ein Computernetzwerk,
- einen Web-Server (124), der operativ mit dem Computernetzwerk (120) verbunden ist,
- einen Client-Computer (122), versehen mit einem Web-Client, der operativ mit dem Computernetzwerk (120) verbunden ist,
- ein Gateway (116), das das Mobilkommunikationsnetzwerk (110) und das Computernetzwerk operativ verbindet,
dadurch charakterisiert, dass das Mobilkommunikationsendgerät (300) eine Verarbeitungseinheit aufweist, die zum Durchführen eines Verfahrens gemäß einem der Ansprüche 1 bis 7 eingerichtet ist.

11. System gemäß Anspruch 10,
wobei der Web-Server (124) einen Ordnungs- und Registrierungsprozess durchführt, der das Registrieren eines Benutzers über den Web-Client in dem Client-Computer (122) und Herunterladen einer speziell eingerichteten Endgerätanwendung von dem Web-Server (124) auf das Mobilkommunikationsendgerät (300) erlaubt.

12. System gemäß Anspruch 11,
wobei der Programmcode der speziell eingerichteten Endgeräteanwendung mit einem eindeutigen Identifikator und einem eindeutigen Basisschlüssel markiert ist.

13. System gemäß einem der Ansprüche 11-12,
ferner aufweisend einen Verifikationsserver (130), der einen Verifikationsprozess (214) durchführt, eingerichtet zum Verifizieren der in dem Mobilkommunikationsendgerät bereitgestellten elektronischen Signatur.

## Revendications

1. Procédé pour produire une signature électronique, mis en oeuvre par une unité de traitement dans un terminal, dans lequel le procédé comprend les étapes suivantes :
- extraire une clé de base dans une zone de mémoire du terminal ;
- introduire des données d'utilisateur ;
- engendrer une clé dynamique sur la base de la clé de base et des données d'entrée ;
- recevoir un message électronique ; et
- engendrer une signature électronique pour le message, à l'aide de la clé dynamique engendrée, **caractérisé en ce que** :
l'étape d'introduction de données d'un utilisateur inclut l'introduction d'un justificatif d'identité de l'utilisateur,
le terminal est un terminal de communication mobile conçu pour la communication avec un réseau de communication mobile, tel qu'un réseau GSM, UMTS ou 3G, le terminal mobile contenant l'unité de traitement qui met en oeuvre le procédé, et
l'étape d'extraction d'une clé de base comprend l'introduction de la clé de base depuis une portion de code exécutable d'une application de terminal qui a été téléchargée dans le terminal de communication mobile, la portion de code étant contenue dans la zone de mémoire du terminal de communication mobile.

2. Procédé selon la revendication 1, dans lequel au moins la clé de base est brouillée dans ladite portion de code exécutable.

3. Procédé selon l'une des revendications 1 et 2, dans lequel l'étape de génération d'une clé dynamique sur la base de la clé de base et du justificatif d'identité se fonde en outre sur une valeur de compteur extraite, provenant d'un compteur du terminal, en introduisant la valeur de compteur à partir d'une mémoire vive du terminal.

4. Procédé selon l'une des revendications 1 à 3, dans lequel l'étape d'introduction d'un justificatif d'identité comprend :
l'extraction d'un mot de passe de l'utilisateur.

5. Procédé selon l'une des revendications 1 à 4, dans lequel l'étape de génération d'une clé dynamique comprend :
l'utilisation de la clé de base, de la valeur de compteur et du justificatif d'identité en tant qu'entrée.

6. Procédé selon l'une des revendications 1 à 5, comprenant en outre l'étape consistant à :
- envoyer un message signé comprenant le message électronique et la signature engendrée, à un serveur de vérification.

7. Procédé selon la revendication 6, dans lequel la valeur de compteur et l'identificateur unique sont également envoyés au serveur de vérification.

8. Programme informatique comprenant des instructions de programme qui, lors de leur exécution par une unité de traitement dans un terminal de communication mobile font mettre en oeuvre à l'unité de traitement un procédé selon l'une des revendications 1 à 7.

9. Terminal de communication mobile permettant de produire une signature électronique, le terminal de communication mobile comprenant une unité de traitement conçue pour mettre en oeuvre un procédé selon l'une des revendications 1 à 7.

10. Système permettant de produire une signature électronique dans un terminal de communication mobile, comprenant :
- un réseau de communication mobile (110) comportant au moins une station de base (111),
- un terminal de communication mobile (300) communiquant avec ladite station de base (111),
- un réseau d'ordinateurs (120),
- un serveur Web (124) fonctionnellement connecté audit réseau d'ordinateurs (120),
- un ordinateur client (122) pourvu d'un client Web, fonctionnellement connecté audit réseau d'ordinateurs (120),
- une passerelle (116) interconnectant fonctionnellement ledit réseau de communication mobile (110) et ledit réseau d'ordinateurs (120), **caractérisé en ce que** ledit terminal de communication mobile (300) comprend une unité de traitement conçue pour mettre en oeuvre un procédé selon l'une des revendications 1 à 7.

11. Système selon la revendication 10,
dans lequel ledit serveur Web (124) exécute un processus de commande et d'enregistrement qui permet l'enregistrement d'un utilisateur par le biais du client Web de l'ordinateur client (122) et le téléchargement d'une application de terminal spécialement adaptée, du serveur Web (124) vers ledit terminal de communication mobile (300).

12. Système selon la revendication 11,
dans lequel un code de programme de ladite application de terminal spécialement adaptée est marqué avec un identificateur unique et une clé de base unique.

13. Système selon l'une des revendications 11 et 12,
comprenant en outre un serveur de vérification (130) exécutant un processus de vérification (214) conçu pour vérifier ladite signature électronique produite dans ledit terminal de communication mobile.
